# EUROPEAN PATENT APPLICATION

(11) **EP 4 475 331 A1**
(43) Date of publication of application: **11.12.2024**
(21) Application number: 22941931.2
(22) Date of filing: 16.05.2022
(51) Int. Cl.: H01M 50/593, H01M 50/15, H01M 50/586

(54) **END COVER ASSEMBLY, BATTERY CELL, BATTERY, AND ELECTRICAL DEVICE**

(71) Applicant: Contemporary Amperex Technology (Hong Kong) Limited, Central, Central And Western District (HK)
(72) Inventor: ZHOU, Wenlin, Ningde, Fujian 352100 (CN); YANG, Daowei, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2022/093122
(87) International publication number: WO 2023/220880

(57) **Abstract**

The present application provides an end cover assembly, a battery cell, a battery, and an electrical device. The end cover assembly comprises: a top cover sheet, comprising a first surface and a second surface which are arranged opposite to each other along the thickness direction of the top cover sheet, a mounting hole running through the top cover sheet along the thickness direction thereof, and an inner wall surface that faces the mounting hole; the top cover sheet is provided with a first insulating layer, and at least part of the first insulating layer is located on the inner wall surface. In the present application, at least part of the first insulating layer is located on the inner wall surface, facing the mounting hole, of the top cover sheet, and when an electrode terminal is located at the mounting hole and is electrified, the first insulating layer can ensure that the electrode terminal and the top cover sheet are insulated from each other, thereby mitigating the safety problem caused by short-circuit connection between the top cover sheet and the electrode terminal.

## Description

### TECHNICAL FIELD

The present disclosure relates to the field of a battery, and in particular to an end cover assembly, a battery cell, a battery and an electrical apparatus.

### BACKGROUND

Energy conservation and emission reduction are the key to a sustainable development of the automobile industry. Electric vehicles have become an important part of the sustainable development of the automobile industry as they are energy saving and environmentally friendly. Battery technology is an important factor related to the development of the electric vehicles.

In a structure of an existing battery cell, the battery cell includes a housing, a top cover sheet covering the housing, and a battery core assembly located in the housing. Tabs of the battery core assembly are electrically connected to the outside through electrode terminals on the top cover sheet. Therefore, charged electrode terminals are provided on the top cover sheet, which results in reduced safety performance of the end cover assembly.

### SUMMARY

In view of the above problems, the present disclosure provides an end cover assembly, a battery cell, a battery and an electrical apparatus, which can mitigate safety problems caused by short-circuit connections between an electrode terminal and a top cover sheet of a battery during use.

In a first aspect, the present disclosure provides an end cover assembly for a battery cell, including: a top cover sheet including a first surface and a second surface arranged opposite to each other along a thickness direction of the top cover sheet, a mounting hole extending through the top cover sheet along the thickness direction and an inner wall surface facing the mounting hole; wherein a first insulating layer is provided on the top cover sheet, and at least part of the first insulating layer is located on the inner wall surface.

In the technical solution of the embodiments of the present disclosure, the top cover sheet of the end cover assembly includes the mounting hole extending through the first surface and the second surface along the thickness direction of the top cover sheet, thus when the end cover assembly is configured for the battery cell, an electrode terminal can be installed on the mounting hole to allow the electrode terminal to lead an electrode tab located inside the battery cell to the outside of the battery cell. At least part of the first insulating layer is located on the inner wall surface of the top cover sheet facing the mounting hole, thus when the electrode terminal is located in the mounting hole and is charged, the first insulating layer can guarantee mutual insulation between the electrode terminal and the top cover sheet, thereby preventing a safety issue caused by short circuit between the top cover sheet and the electrode terminal.

In some embodiments, the first insulating layer extends from the first surface to the second surface through the inner wall surface.

In these embodiments, with an increase of a distribution area of the first insulating layer, part of the first insulating layer is distributed on the first surface and the second surface, to increase a creepage distance between the electrode terminal and the top cover sheet, and further prevent the safety issue caused by short circuit between the top cover sheet and the electrode terminal.

In some embodiments, the end cover assembly further includes:
a first insulating member, at least part of the first insulating member being disposed on the first surface, and the first insulating member including a first through hole that is communicated with the mounting hole and located inside the mounting hole; and
a second insulating member, at least part of the second insulating member being disposed on the second surface, the second insulating member including a second through hole communicated with the mounting hole that is located inside the second through hole, and a second side surface of the second insulating member facing the second through hole and the inner wall surface are spaced apart in a peripheral direction of the mounting hole;
wherein the first insulating layer includes a first portion located on the first surface and a second portion located on the second surface, and a dimension of the first portion extending along the peripheral direction is smaller than that of the second portion extending along the peripheral direction.

In these embodiments, the first insulating member and the second insulating member are provided on two sides of the top cover sheet respectively, and the first through hole on the first insulating member is correspondingly located in the mounting hole. Therefore, a distance between the first insulating member and the electrode terminal is relatively small. Even if an extension dimension of the first portion is relatively small, the insulation performance between the electrode terminal and the top cover sheet can be guaranteed. The mounting hole is located in the second through hole on the second insulating member, thus at least part of the second surface is exposed by the second through hole. An extension dimension of the second portion in the peripheral direction is relatively big, thus the second portion can increase the creepage distance between the electrode terminal and the second surface, to improve the insulation performance between the electrode terminal and the top cover sheet. In the embodiments, with a different setting of the extension dimensions of the first portion and the second portion, material can be saved and energy saving can be achieved on the premise of guaranteeing the insulation performance between the electrode terminal and the top cover sheet.

In some embodiments, the second portion is in lap joint with a surface of the second insulating member facing the top cover sheet. Thus the first insulating layer and the second insulating member can form a closed insulating space, thereby improving the safety issue caused by short circuit between the top cover sheet and the electrode terminal.

In some embodiments, the dimension of the second portion extending along the peripheral direction is greater than 1 mm, thereby allowing that the first insulating layer has a large enough dimension on the second surface to further prevent the safety issue caused by short circuit between the top cover sheet and the electrode terminal.

In some embodiments, the dimension of the first portion extending along the peripheral direction is greater than 0.5 mm, allowing that the first insulating layer and the second insulating layer form a relatively closed insulating space, and further preventing the safety issue caused by short circuit between the top cover sheet and the electrode terminal.

In some embodiments, the end cover assembly further includes an electrode terminal installed on the top cover sheet; and a sealing member, at least part of which is located in the mounting hole, wherein the electrode terminal includes an abutment surface that is abutted against the sealing member, and at least part of the abutment surface is provided with a second insulating layer. With the second insulating layer provided on the abutment surface of the electrode terminal, the insulation performance between the electrode terminal and the top cover sheet can be further guaranteed, and sparks on the electrode terminal can be prevented from being sputtered to the top cover sheet through between the electrode terminal and the sealing member.

In some embodiments, the first insulating member is in lap joint with the sealing member in the mounting hole. With the first insulating member connecting the sealing member via a lap joint, it can be ensured that the first insulating member and the sealing member can enclose and form a relatively closed insulating space, further preventing the safety issue caused by the short circuit between the top cover sheet and the electrode terminal.

In some embodiments, the sealing member includes a first segment located in the mounting hole and a second segment extending from the first segment in a direction away from the mounting hole, and the second segment is located at the second through hole and abutted against part of the second surface.

In these embodiments, with the second segment and the second segment covering at least part of the second surface, the creepage distance between the electrode terminal and a surface of the top cover sheet is further increased, and the safety issue caused by short circuit between the top cover sheet and the electrode terminal is prevented.

In some embodiments, the electrode terminal includes: a connecting segment located in the mounting hole; and an abutment segment extending from the connecting segment in a direction away from the mounting hole, at least part of the abutment segment being abutted against the sealing member, and at least part of the second insulating layer being provided on the abutment segment.

In these embodiments, the electrode terminal includes the connecting segment and the abutment segment, thereby improving the stability of the connection between the electrode terminal and the top cover sheet. The abutment segment is abutted against the sealing member, and the second insulating layer is provided on the abutment segment, to further prevent the safety issue caused by short circuit between the top cover sheet and the electrode terminal.

In some embodiment, the connecting segment includes a bottom surface facing away from the abutment segment and a peripheral side surface connecting the bottom surface and the abutment segment, and at least part of the second insulating layer is arranged on the peripheral side surface of the connecting segment. With at least part of the second insulating layer provided on the peripheral side surface of the connecting segment, the insulating performance between the electrode terminal and the inner wall surface of the top cover sheet can be guaranteed and the safety issue caused by short circuit between the top cover sheet and the electrode terminal can be further prevented.

In some embodiments, at least part of the second insulating layer is provided on a bottom surface, thereby further improving the insulating performance between the electrode terminal and the top cover sheet and prevent the safety issue caused by short circuit between the top cover sheet and the electrode terminal.

In some embodiments, the second insulating layer includes a third portion that is located on the abutment segment and arranged around the connecting segment in an annular shape. With the third portion arranged around the connecting segment, the insulation between the abutment segment and the top cover sheet at different positions in the peripheral direction can be guaranteed, further preventing the safety issue caused by short circuit between the top cover sheet and the electrode terminal.

In some embodiments, the electrode terminal and the second surface are located on the same side of the top cover sheet, and the second insulating layer is provided on the abutment surface in an annular shape to improve the insulation between the electrode terminal and the top cover sheet at different positions in the peripheral direction.

In some embodiments, a thickness of the first insulating layer and/or the second insulating layer is 2 µm to 100 µm, thereby avoiding insufficient insulation performance caused by a small thickness of the first insulating layer and/or the second insulating layer, or adversely affecting the assembly between the top cover sheet and the electrode terminal due to large thickness of the first insulating layer and/or the second insulating layer.

In a second aspect, the present disclosure provides a battery cell including the end cover assembly according to any one of the above embodiments.

In a third aspect, the present disclosure provides a battery including the above battery cell.

In a fourth aspect, the present disclosure provides an electrical apparatus including the above battery configured to provide electrical energy.

The above description is only an overview of the technical solutions of the present disclosure. In order to have a clearer understanding of the technical means of the present disclosure and implement them according to the content of the description, and in order to make the above and other purposes, features and advantages of the present disclosure more obvious and understandable, specific implementations of the present disclosure are specifically listed below.

### BRIEF DESCRIPTION OF THE DRAWINGS

Various other advantages and benefits will become apparent to those skilled in the art upon reading following detailed description of preferred embodiments. Drawings are for the purpose of illustrating preferred embodiments only and are not to be construed as limiting the present disclosure. Throughout the drawings, the same reference sign is used to designate the same component.
FIG. 1 is a schematic structural diagram of a vehicle provided in an embodiment of the present disclosure;
FIG. 2 is a schematic structural diagram of a battery pack provided in an embodiment of the present disclosure;
FIG. 3 is a schematic structural diagram of a battery module provided in an embodiment of the present disclosure;
FIG. 4 is an exploded schematic diagram of a structure of a battery cell provided in an embodiment of the present disclosure;
FIG. 5 is a schematic structural diagram of an end cover assembly provided in an embodiment of the present disclosure;
FIG. 6 is a cross-sectional view taken along line A-A in FIG. 5;
FIG. 7 is a partially enlarged schematic structural diagram of part I as shown in FIG. 6;
FIG. 8 is a schematic structural diagram of a top cover sheet and a first insulating layer in FIG. 7;
FIG. 9 is a exploded schematic structural diagram of FIG. 5;
FIG. 10 is a schematic structural diagram of an end cover assembly provided in another embodiment of the present disclosure;
FIG. 11 is a cross-sectional view taken along line B-B in FIG. 10;
FIG. 12 is a partial enlarged schematic structural diagram of part II in FIG. 11;
FIG. 13 is a schematic structural diagram of a top cover sheet and a first insulating layer in FIG. 12;
FIG. 14 is an exploded schematic structural diagram of FIG. 10;
FIG. 15 is a schematic structural diagram of an electrode terminal of an end cover assembly provided in an embodiment of the present disclosure;
FIG. 16 is a cross-sectional view taken along line C-C in FIG. 15;
FIG. 17 is a schematic structural diagram of an electrode terminal of an end cover assembly provided in another embodiment of the present disclosure;
FIG. 18 is a side view of FIG. 17.

Reference signs in the specific implementation are as follows:
1 vehicle, 10 battery, 11 controller, 12 motor;
20 battery module;
30 box, 301 first part, 302 second part;
40 battery cell, 41 end cover assembly, 411 top cover sheet, 411a first surface, 411b second surface, 411c mounting hole, 411d inner wall surface, 412, first insulating layer, 412a first portion, 412b second portion, 413 first insulating member, 413a first through hole, 413b protrusion, 414 second insulating member, 414a second through hole, 415 electrode terminal, 415a abutment surface, 415b connecting segment, 415c abutment segment, 415d peripheral side surface, 415e bottom surface, 416 sealing member, 416a first segment, 416b second segment, 417 second insulating layer, 417a third portion, 42 housing, 43 electrode assembly.

### DETAILED DESCRIPTION

Embodiments of technical solutions of the present disclosure will be described in detail below with reference to accompanying drawings. Following embodiments are only used to illustrate the technical solutions of the present disclosure more clearly, and are therefore only used as examples and cannot be used to limit the protection scope of the present disclosure.

It should be noted that unless otherwise defined, technical and scientific terms used in embodiments of the present disclosure have the same meaning as those normally understood by those skilled in the art.

In the description of embodiments of the present disclosure, orientations or positional relationship indicated by technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "peripheral", etc. are based on orientations or positional relationship indicated in the drawings, is only for the convenience of describing the embodiments of the present disclosure and simplifying the description, and does not indicate or imply that the device or element referred to must have a specific orientation, be constructed and operated in a specific orientation, and therefore cannot be understood as limitations to the embodiments of the present disclosure.

Further, technical terms "first", "second", etc. are used for description and cannot be understood as indicating or implying the relative importance or implicitly indicating the number of technical features. In the description of the embodiments of the present disclosure, the term "a plurality of" as used in embodiments of the present disclosure means more than two.

In the description of embodiments of the present disclosure, unless otherwise stated or defined, terms "installation", "connected to", "connected with", "attachment" and the like are to be understood broadly, and may be, for example, a fixed connection, a detachable connection, or an integral connection; a mechanical connection or an electrical connection; they can be connected directly or indirectly through an intermediate medium or an internal communication or interaction between two elements. The specific meaning of the above terms in the present disclosure can be understood by those skilled in the art according to actual circumstance.

In the description of the embodiments of the present disclosure, unless otherwise expressly stated or defined, a first feature "above" or "below" a second feature may mean that the first feature and the second feature are in direct contact, or the first feature and the second feature are in indirect contact through intermediate medium. Furthermore, the first feature "above", "on" or "over" the second feature may mean that the first feature is directly above or diagonally above the second feature, or simply means that the first feature is higher in level than the second feature. The first feature "below", "under" or "beneath" the second feature may mean that the first feature is directly below or diagonally below the second feature, or simply means that the first feature is lower in level than the second feature.

At present, judging from the development of the market situation, application of power batteries is becoming more and more extensive. Power batteries are not only used in energy storage power systems such as hydropower, thermal power, wind power and solar power stations, but are also widely used in electric vehicles such as electric bicycles, electric motorcycles and electric cars, as well as in many fields such as military equipment and aerospace. As the application fields of power batteries continue to expand, their market demand is also constantly expanding.

In the present disclosure, the battery cell can include a lithium ion secondary battery cell, a lithium ion primary battery cell, a lithium sulfur battery cell, a sodium lithium ion battery cell, a sodium ion battery cell or a magnesium ion battery cell, etc. which is not limited in embodiments of the present disclosure. The battery cell may be cylindrical, flat, rectangular parallelepiped or other shapes which is not limited in embodiments of the present disclosure.

The battery mentioned in embodiments of the present disclosure refers to a single physical module including one or more battery cells to provide higher voltage and capacity. For example, the battery mentioned in the present disclosure may include a battery module or a battery pack. The battery generally includes a box for packaging one or more battery cells. The box can prevent liquid or other foreign matter from affecting the charging or discharging of the battery cells.

The battery cell includes an electrode assembly and an electrolyte. The electrode assembly includes a positive electrode sheet, a negative electrode sheet and a separator. The battery cell works mainly by movement of metal ions between the positive electrode sheet and the negative electrode sheet. The positive electrode sheet includes a positive current collector and a positive active material layer which is applied on the surface of the positive current collector. The positive current collector includes a positive current collecting part and a positive tab connected to the positive current collecting part. The positive current collecting part is coated with the positive active substance layer, and the positive tab is not coated with the positive active substance layer. Taking the lithium-ion battery as an example, the material of the positive current collector can be aluminum, and the positive active material layer includes the positive active material, which can be lithium cobaltate, lithium iron phosphate, lithium ternary or lithium manganate, etc. The negative electrode sheet includes a negative current collector and a negative active material layer which is applied on the surface of the negative current collector. The negative current collector includes a negative current collecting part and a negative tab. The negative current collecting part is coated with the negative active substance layer, and the negative tab is not coated with the negative active substance layer. The material of the negative current collector can be copper, and the negative active material layer includes the negative active material, which may be carbon or silicon. The material of the separator can be polypropylene (PP) or PE (polyethylene).

The inventors have noticed that in the existing technical solution, the battery cell includes a housing, an electrode assembly located in the housing, and an end cover assembly closing an opening of the housing. The end cover assembly is provided with an electrode terminal, and the electrode terminal is connected to an electrode tab of the electrode assembly, so that the electrode tab can be electrically connected to an external member through the electrode terminal. Then during the charging and discharging process of the battery cell, the electrode terminal will be charged. A top cover sheet of the end cover assembly usually is made of material of metal, allowing for a short circuit to easily occur between the electrode terminal and the top cover sheet, thereby affecting the safety performance of the battery cells.

In order to solve the safety problem caused by the short circuit between the electrode terminal and the top cover sheet, the inventors found that an insulating layer can be provided on the top cover sheet to increase a creepage distance between the electrode terminal and the top cover sheet. Specifically, the top cover sheet is provided with a mounting hole for an installation of the electrode terminal, and the insulating layer can be provided on an inner wall surface of the top cover sheet facing the mounting hole to guarantee insulation between the electrode terminal and the top cover sheet.

Based on the above considerations, in order to solve the problem of the short circuit between the electrode terminal and the top cover sheet, the inventors have designed an end cover assembly of the battery cell after in-depth research. The end cover assembly includes a top cover sheet and a first insulating layer. The top cover sheet includes a mounting hole extending through the top cover sheet. The top cover sheet includes an inner wall surface facing the mounting hole, and the first insulating layer at least covers the inner wall surface.

Technical solutions described in embodiments of the present disclosure are applicable to a battery and an electrical apparatus with the battery.

The electrical apparatus can be vehicles, mobile phones, portable devices, laptops, ships, spacecraft, electric toys, electric tools and the like. The vehicles can be fuel vehicles, gas vehicles or new energy vehicles. The new energy vehicles can be pure electric vehicles, hybrid vehicles, extended-range vehicles and the like. The spacecraft include planes, rockets, space shuttles, spaceships, and the like. The electric toys include stationary or mobile electric toys, such as game consoles, electric car toys, electric ship toys and electric aircraft toys. The electric tools include metal cutting electric tools, grinding electric tools, assembly electric tools and railway electric tools, such as electric drills, electric grinders, electric wrenches, electric screwdrivers, electric hammers, impact drills, concrete vibrators and planers. There are no special restrictions on the above-mentioned electrical apparatus in the embodiments of the present disclosure.

It should be understood that the technical solutions described in the embodiments of the present disclosure are not limited to the battery and the electrical apparatus described above, but can also be applied to all batteries with the box and the electrical apparatus with the battery. However, for the sake of simplicity, the following embodiments are all explained by taking an electric vehicle as an example.

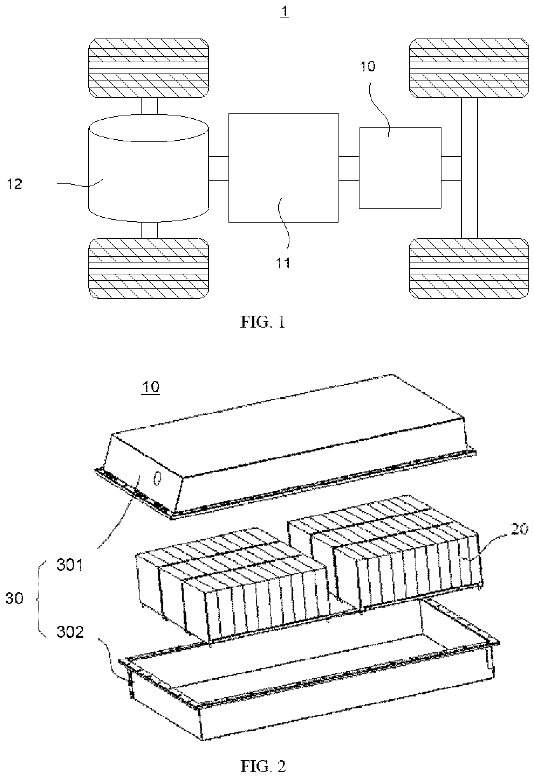

Refer to FIG. 1, which is a structural diagram of a vehicle provided in some embodiments of the present disclosure. The vehicle 1 can be a fuel vehicle, a gas vehicle or a new energy vehicle. The new energy vehicle can be a pure electric vehicle, a hybrid vehicle, an extended-range vehicle and the like. A battery 10 is provided in the interior of a vehicle 1, and can be arranged in the bottom or in the head or back of the vehicle 1. The battery 10 can be used to provide electricity to the vehicle 1, for example, the battery 10 can be used as an operating power source for the vehicle 1. The vehicle 1 may also include a controller 11 and a motor 12. The controller 11 is configured to control the battery 10 to provide electricity to the motor 12, for example, for electricity requirements for the starting, navigation and driving of the vehicle 1.

In some embodiments of the present disclosure, the battery 10 may be used not only as an operating power source for the vehicle 1, but also as a driving power source for the vehicle 1, providing driving power to the vehicle 1 in place or in part in place of fuel or natural gas.

In order to meet different power requirements, the battery 10 may include a plurality of battery cells. A battery cell refers to the smallest unit that constitutes a battery module or battery pack. The plurality of battery cells may be in a series connection and/or in a parallel connection via electrode terminals for various applications. The battery mentioned in the present disclosure include the battery module or the battery pack. The plurality of battery cells can be in a series connection, a parallel connection, or a mixed connection. The mixed connection refers to a mixture of the series mixed connection and the parallel mixed connection. In the embodiments of the present disclosure, the plurality of battery cells can be directly formed into a battery pack, or the battery module 20 can be formed first, and then the battery module 20 can be formed into a battery pack.

FIG. 2 is a schematic structural diagram of a battery 10 provided in an embodiment of the present disclosure.

As shown in FIG. 2, the battery 10 includes a box 30 and a battery cell (not shown in the figure) accommodated in the box.

The box 30 may be formed in a single cuboid, a simple three-dimensional structure such as a cylinder or a sphere, or a complex three-dimensional structure composed of a combination of simple three-dimensional structures such as a cuboid, a cylinder or a sphere, which is not limited in the embodiments of the present disclosure. The material of the box body 30 can be alloy materials such as aluminum alloy, iron alloy, etc., or polymer materials such as polycarbonate, polyisocyanurate foam, or composite materials such as glass fiber and epoxy resin, which is not limited in the embodiments of the present disclosure.

The box 30 is configured to accommodate the battery cells and can be of a variety of structures. In some embodiments, the box 30 may include a first box part 301 and a second box part 302 that are mutually covered. The first box part 301 and the second box part 302 jointly define a holding space for holding the battery cells. The second box part 302 can have a hollow structure with an opening at one end, the first box part 201 can have a plate structure, and the first box part 301 closes an opening side of the second box part 302 to form the box 30 with the holding space. Both the first box part 301 and the second box part 302 may have a hollow structure with an opening at one side. An opening side of the first box part 301 covers an opening side of the second box part 302 to form the box 30 with the holding space. Of course, the first box part 301 and the second box part 302 can be in a variety of shapes, such as cylinders, cuboids, etc.

In order to improve the sealing performance after the first box part 301 and the second box part 302 are connected, a sealing component, such as sealant, sealing ring, etc., may also be provided between the first box part 301 and the second box part 302.

Assuming that the first box part 301 is located on the top of the second box part 302, the first box part 301 can also be called an upper box cover, and the second box part 302 can also be called a lower box.

In the battery 10, one or a plurality of battery cells are provided. If the plurality of battery cells are provided, the plurality of battery cells can be in a series connection, a parallel connection, or a mixed connection. The mixed connection refers to a mixture of the series mixed connection and the parallel mixed connection. The plurality of battery cells can be directly in a series connection, a parallel connection, or a mixed connection, and then the entirety formed by the plurality of battery cells is accommodated in the box 30; of course, the battery module 20 can be formed first by the plurality of battery in a series connection, a parallel connection, or a mixed connection, and then a plurality of battery modules 20 can be in a series connection, a parallel connection, or a mixed connection to form the entirety and accommodated in the box 30.

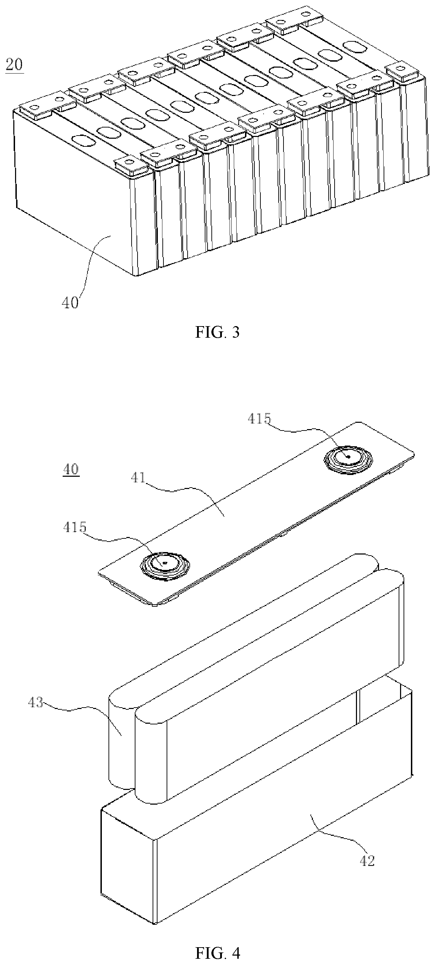

FIG. 3 is a schematic structural diagram of a battery module 20 provided in an embodiment of the present disclosure.

In some embodiments, as shown in FIG. 3, a plurality of battery cells 40 are provided, and the plurality of battery cells 40 are first in series connection, in parallel connection, or in mixed connection to form the battery module 20. A plurality of battery modules 21 are in series connection, in parallel connection or in mixed connection to form the entirety, and are accommodated in the box.

The plurality of battery cells 40 in the battery module 20 can be electrically connected through a bus component, allowing a parallel, series or mixed connection of the plurality of battery cells 40 in the battery module 20.

In the present disclosure, the battery cell 40 may include a lithium-ion battery cell, a sodium-ion battery cell, or a magnesium-ion battery cell, etc., which is not limited in the embodiments of the present disclosure. The battery cell 40 may be in the shape of a cylinder, a flat body, a rectangular parallelepiped or other shapes, which is not limited in the embodiments of the present disclosure. The battery cell 40 are generally divided into three types according to packaging methods: a cylindrical battery cell, a rectangular battery cell and a soft-pack battery cell, which is not limited in the embodiments of the present disclosure. However, for the sake of simplicity of description, the following embodiments take the rectangular battery cell 40 as an example.

FIG. 4 is an exploded schematic diagram of a structure of a battery cell 40 provided in some embodiments of the present disclosure. The battery cell 40 refers to the smallest unit that constitutes the battery. As shown in FIG. 4, the battery cell 40 includes an end cover assembly 41, a housing 42 and an electrode assembly 43.

The end cover assembly 41 refers to a component that covers the opening of the housing 42 to isolate the internal environment of the battery cell 40 from the external environment. Without limitation, the shape of the end cover assembly 41 may be adapted to the shape of the housing 42 to fit the housing 42. Optionally, the end cover assembly 41 can be made of a material with a certain hardness and strength (such as aluminum alloy). In this way, the end cover assembly 41 is less likely to be deformed when subjected to extrusion and collision, allowing the battery cell 40 to have better performance, high structural strength, and improved safety performance. The end cover assembly 41 may be provided with functional components such as an electrode terminal 415. The electrode terminal 415 may be configured to be electrically connected with the electrode assembly 43 for outputting or inputting electrical energy of the battery cell 40. In some embodiments, the end cover assembly 41 may also be provided with a pressure relief mechanism for releasing the internal pressure when the internal pressure or temperature of the battery cell 40 reaches a threshold. The end cover assembly 41 can also be made of various materials, such as copper, iron, aluminum, stainless steel, aluminum alloy, plastic, etc., which are not particularly limited in the embodiments of the present disclosure. In some embodiments, an insulating member may also be provided inside the end cover assembly 41 and configured to isolate electrical connection components in the housing 42 from the end cover assembly 41 to reduce the risk of short circuit. For example, the insulating member may be formed of plastic, rubber, etc.

The housing 42 is a component configured to cooperate with the end cover assembly 41 to form an internal environment of the battery cell 40. The internal environment formed can be configured to accommodate the electrode assembly 43, an electrolyte (not shown in the figure) and other components. The housing 42 and the end cover assembly 41 may be independent components, an opening may be provided on the housing 42, and the end cover assembly 41 covers the opening at the opening to form the internal environment of the battery cell 40. Without limitation, the end cover assembly 41 and the housing 42 can also be integrated. Specifically, a common connection surface can be formed between the end cover assembly 41 and the housing 42 before other components are put into the housing. When the housing 42 needs to be packaged inside, the end cover assembly 41 covers the housing 42. The housing 42 can be of various shapes and sizes, such as rectangular parallelepiped, cylinder, hexagonal prism, etc. Specifically, the shape of the housing 42 can be determined according to the specific shape and size of the electrode assembly 43. The housing 42 may be made of a variety of materials, such as copper, iron, aluminum, stainless steel, aluminum alloy, plastic, etc., which are not particularly limited in the embodiments of the present disclosure.

The electrode assembly 43 is a component in the battery cell 40 where electrochemical reactions occur. One or more electrode assemblies 43 may be contained within the housing 42. The electrode assembly 43 is mainly formed by a positive electrode sheet and a negative electrode sheet that are wound or stacked, and a separator is usually provided between the positive electrode sheet and the negative electrode sheet. Portions of the positive electrode sheet and the negative electrode sheet that contain active materials constitute the main body of the electrode assembly, and portions of the positive electrode sheet and the negative electrode sheet that do not contain active materials each constitute tabs (not shown in the figure). The positive tab and the negative tab can be located together at one end of the main body or located at two ends of the main body, respectively. During the charging and discharging process of the battery, the positive active material and negative active material react with the electrolyte, and the electrode tabs are connected to the electrode terminal to form a current loop.

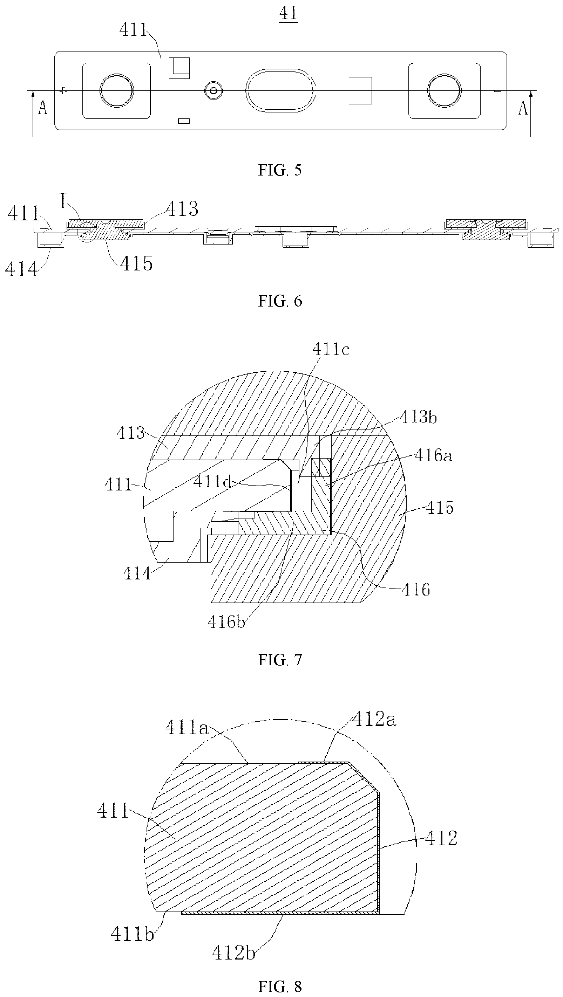

Please refer to FIGS. 5 to 7. FIG. 5 is a schematic structural diagram of an end cover assembly provided in some embodiments of the present disclosure; FIG. 6 is a cross-sectional view taken along line A-A in FIG. 5; FIG. 7 is a partially enlarged schematic structural diagram of part I as shown in FIG. 6; FIG. 8 is a schematic structural diagram of a top cover sheet and a first insulating layer in FIG. 7. The end cover assembly 211 can be used to cover the opening of the housing 11 of the battery cell 10 in the embodiments.

As shown in FIGS. 5 to 7, in some embodiments, the end cover assembly 41 includes a top cover sheet 411, and the top cover sheet 411 includes a first surface 411a and a second surface 411b that are oppositely arranged along its own thickness direction, a mounting hole 411c provided in the direction and an inner wall surface 411d facing the mounting hole 411c. A first insulating layer 412 is provided on the top cover sheet 411, and at least part of the first insulating layer 412 is located on the inner wall surface 411d.

In the technical solution of the embodiments of the present disclosure, the top cover sheet 411 of the end cover assembly 41 includes the mounting hole 411c extending through the first surface 411a and the second surface 411b along the thickness direction of the top cover sheet, thus when the end cover assembly 41 is configured for the battery cell, the electrode terminal 415 can be installed on the mounting hole 411c to allow the electrode terminal 415 to lead an electrode tab located inside the battery cell to the outside of the battery cell. At least part of the first insulating layer 412 is located on the inner wall surface 411d of the top cover sheet 411 facing the mounting hole 411c, thus when the electrode terminal 415 is located in the mounting hole 411c and is charged, the first insulating layer 412 can guarantee mutual insulation between the electrode terminal 415 and the top cover sheet 411, thereby preventing a safety issue caused by short circuit between the top cover sheet 411 and the electrode terminal 415.

Optionally, the material of the top cover sheet 411 may include copper, iron, aluminum, stainless steel, aluminum alloy, etc., to improve the structural rigidity of the top cover sheet 411. Optionally, the top cover sheet 411 may be substantially in the form of a plate, thereby reducing the size of space occupied by the top cover sheet 411 in the thickness direction. Optionally, a structure such as a groove, a through hole, a step hole, may also be provided on the top cover sheet 411 to provide installation positions and/or position limits for components provided on the top cover sheet 411.

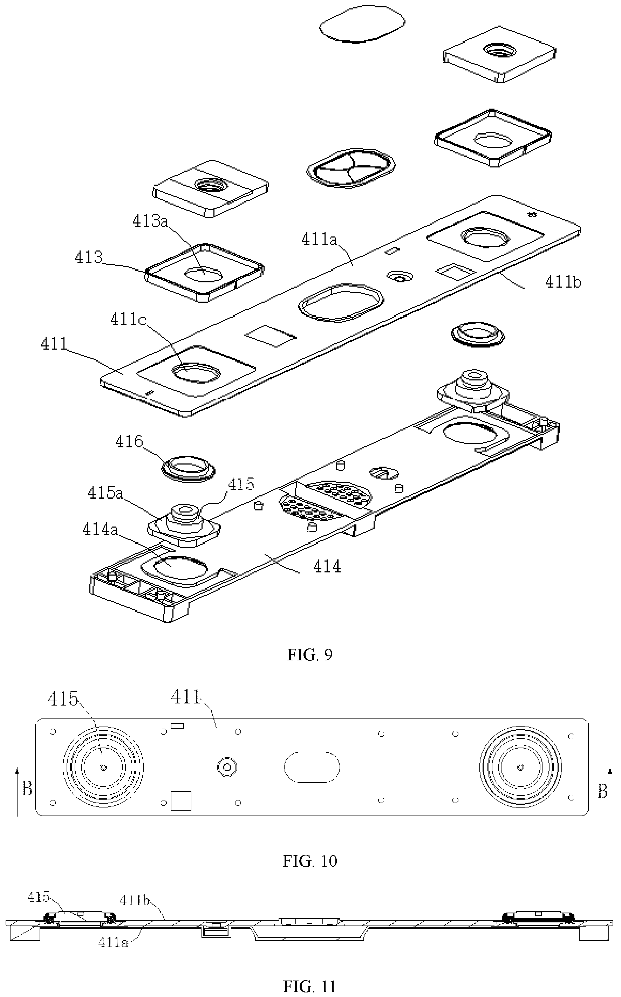

Please refer to FIG. 9, which is an exploded schematic structural diagram of FIG. 5. As shown in FIG. 9, optionally, the top cover sheet 411 may include a through hole for an installation of a pressure relief structure. The top cover sheet 411 may further include a step groove provided around the mounting hole 411c to provide a limit to the electrode terminal 415 through the step groove.

According to some embodiments of the present disclosure, as shown in FIGS. 8 and 9, the first insulating layer 412 extends from the first surface 411a to the second surface 411b through the inner wall surface 411d.

In these embodiments, by an increase of a distribution area of the first insulating layer 412, part of the first insulating member is distributed on the first surface 411a and the second surface 411b, thereby increasing a creepage distance between the electrode terminal 415 and the top cover sheet 411, and further preventing the safety issue caused by the short circuit between the top cover sheet 411 and the electrode terminal 415.

Optionally, at least part of the first insulating layer 412 is located on the first surface 411a, at least part of the first insulating layer 412 is located on the second surface 411b, and at least part of the first insulating layer 412 completely covers the inner wall surface 411d, thereby further preventing the safety issue caused by the short circuit between the top cover sheet 411 and the electrode terminal 415.

According to some embodiments of the present disclosure, as shown in FIGS. 5 to 9 , the end cover assembly 41 further includes: a first insulating member 413, at least part of the first insulating member 413 being disposed on the first surface 411a, and the first insulating member 413 including a first through hole 413a communicated with the mounting hole 411c and located in the mounting hole 411c; and a second insulating member 414, at least part of the second insulating member 414 being provided on the second surface 411b, the second insulating member 414 including a second through hole 414a communicated with the mounting hole 411c, and the mounting hole 411c being located in the second through hole 414a. A second side surface of the second insulating member 414 facing the second through hole 414a and inner wall surface 411d are spaced apart along a peripheral direction of the mounting hole 411c. The first insulating layer 412 includes a first portion 412a located on the first surface 411a and a second portion 412b located on the second surface 411b, and a dimension of the first portion 412a extending along the peripheral direction is smaller than that of the second portion 412b extending along the peripheral direction.

The peripheral direction is a direction from the center to the inner wall surface 411d of the mounting hole 411c. The dimension of the first portion 412a extending in the peripheral direction is a distance from an outer edge of the first portion 412a to the inner wall surface 411d. The dimension of the second portion 412b extending in the peripheral direction is a distance from an outer edge of the second portion 412b to the inner wall surface 411d.

In these embodiments, the first insulating member 413 and the second insulating member 414 are provided on two sides of the top cover sheet 411 respectively, and the first through hole 413a on the first insulating member 413 is correspondingly located in the mounting hole 411c. Therefore, a distance between the first insulating member 413 and the electrode terminal 415 is relatively small. Even if an extension dimension of the first portion 412a is relatively small, the insulation performance between the electrode terminal 415 and the top cover sheet 411 can be guaranteed. The mounting hole 411c is located in the second through hole 414a on the second insulating member 414, thus at least part of the second surface 411b is exposed by the second through hole 414a. An extension dimension of the second portion 412b in the peripheral direction is relatively big, thus the second portion 412b can increase the creepage distance between the electrode terminal 415 and the second surface 411b, to improve the insulation performance between the electrode terminal 415 and the top cover sheet 411.

In addition, in this embodiment, by different extension dimensions of the first portion 412a and the second portion 412b, materials can be saved and energy saving can be achieved while guaranteeing the insulation performance between the electrode terminal 415 and the top cover sheet 411.

The first insulating member 413 and the second insulating member 414 can be made of various materials. For example, the first insulating member 413 and the second insulating member 414 can be made of insulating materials such as plastic.

The first insulating member 413 and the second insulating member 414 can be arranged in various positions. For example, as shown in FIGS. 5 to 9, when the end cover assembly 41 is applied for the battery cell, the first insulating member 413 and the first surface 411a is located on the side of the top cover sheet 411 facing away from the inside of the housing, and the second insulating member 414 and the second surface 411b are located on the side of the top cover sheet 411 facing the inside of the housing. In this case, the first insulating member 413 may be called upper plastic, and the second insulating member 414 may be called lower plastic.

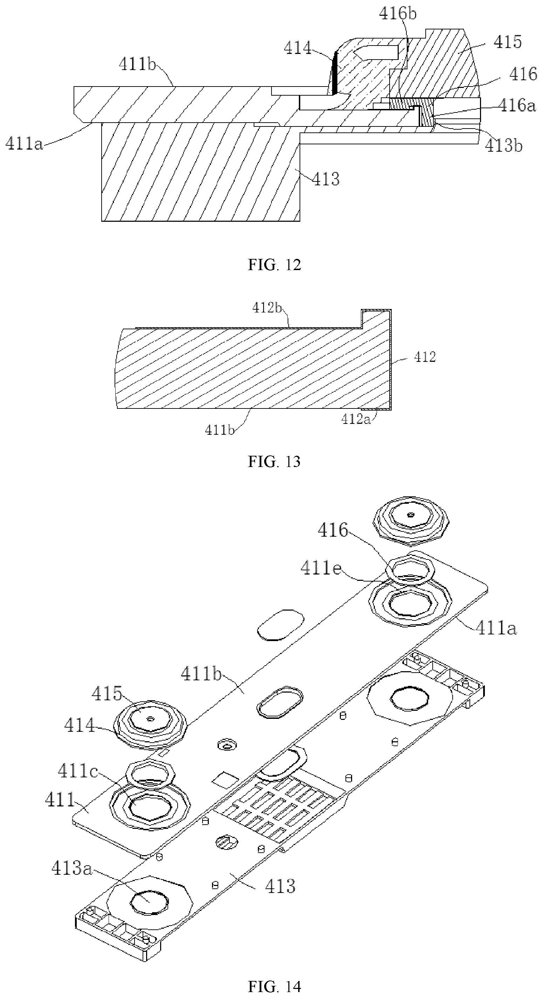

Alternatively, in other embodiments, please refer to FIGS. 10 to 13, in which FIG. 10 is a schematic structural diagram of an end cover assembly 41 provided in another embodiment of the present disclosure; FIG. 11 is a cross-sectional view taken along line B-B in FIG. 10; FIG. 12 is a partial enlarged schematic structural diagram of part II in FIG. 11; FIG. 13 is a schematic structural diagram of a top cover sheet 411 and a first insulating layer in FIG. 12 As shown in FIGS. 10 to 13, when the end cover assembly 41 is applied for the battery cell, the second insulating member 414 and the second surface 411b are located on the side of the top cover sheet 411 away from the inside of the housing, and the first insulating member 413 and the second surface 411b are located on the side of the top cover sheet 411 away from the housing, the first insulating member 413 and the first surface 411a are located on a side of the top cover sheet 411 facing the inside of the housing. In this case, the second insulating member 414 may be called upper plastic, and the first insulating member 413 may be called lower plastic.

According to some embodiments of the present disclosure, as shown in FIGS. 5 to 13, the second portion 412b is in lap joint with a surface of the second insulating member 414 facing the top cover sheet 411. For example, at least part of the second portion 412b is located between the second insulating member 414 and second surface 411b.

In these optional embodiments, when the second portion 412b is in lap joint with the second insulating member 414, the first insulating layer 412 and the second insulating member 414 can form a relatively closed insulating space, further preventing the safety issues caused by short circuit between the top cover sheet 411 and the electrode terminal 415.

According to some embodiments of the present disclosure, the dimension of the second portion 412b extending along the peripheral direction is greater than 1 mm, thereby guaranteeing that the first insulating layer 412 has a sufficiently large size on the second surface 411b to further prevent the safety issue caused by the short circuit between the top cover sheet 411 and the electrode terminal 415.

According to some embodiments of the present disclosure, the dimension of the first portion 412a extending along the peripheral direction is greater than 0.5 mm, thereby guaranteeing that the first insulating layer 412 and the second insulating member 414 form a closed insulating space to further prevent the safety issue caused by the short circuit between the top cover sheet 411 and the electrode terminal 415.

According to some embodiments of the present disclosure, please refer to FIG. 9, FIG. 15, FIG. 16, FIG. 14, FIG. 17 and FIG. 18. The end cover assembly 41 further includes: an electrode terminal 415, installed on the top cover sheet 411; and a sealing member 416, at least part of which is located in the mounting hole 411c. The electrode terminal 415 includes an abutment surface 415a that abuts with the sealing member 416, and at least part of the abutment surface 415a is provided with a second insulating layer 417.

In these optional embodiments, with the second insulating layer 417 on the abutment surface 415a of the electrode terminal 415, the insulation performance between the electrode terminal 415 and the top cover sheet 411 can be further ensured, and the risk of sparks on the electrode terminal 415 sputtering from between the electrode terminal 415 and the sealing member 416 to the top cover sheet 411 is reduced.

The material of the sealing member 416 may be insulating material such as rubber. Optionally, the sealing member 416 is annular and fits the inner wall surface 411d. The electrode terminal 415 can extend into the sealing member 416 and be connected to an electrode tab of the electrode assembly, or an adapting piece can be connected between the electrode tab and the electrode terminal 415, and the adapting piece can extend into the sealing member 416 and be connected with the electrode terminal 415.

According to some embodiments of the present disclosure, as shown in FIGS. 7 and 12, the first insulating member 413 and the sealing member 416 are connected with each other via a lap joint in the mounting hole 411c.

In these optional embodiments, with the first insulating member 413 connected to the sealing member 416 via a lap joint, the first insulating member 413 and the sealing member 416 can enclose and form a relatively closed insulating space. When the electrode terminal 415 or the adapting piece is located in the sealing member 416, the risk of sparks on the electrode terminal 415 or the adapting piece transmitted to the top cover sheet 411 is reduced be ensured to form a relatively, thereby further preventing the safety issue caused by the short circuit between the top cover sheet and the electrode terminal.

The first insulating member 413 can be in a lap joint with the sealing member 416 in many ways. For example, as shown in FIGS. 7 and 12, a protrusion 413b is provided on a side of the first insulating member 413 facing the through hole, protrudes toward the second insulating member 414 and extends into the mounting hole 411c. At least part of the sealing member 416 is located between the protrusion 413b and the inner wall surface 411d, or at least part of the protrusion 413b is located between the sealing member 416 and the inner wall surface 411d, so that the protrusion 413b can be in lap joint with the sealing member 416.

According to some embodiments of the present disclosure, as shown in FIGS. 7 and 12, the sealing member 416 includes a first segment 416a located at the mounting hole 411c and a second segment extending from the first segment 416a in a direction away from the mounting hole 411c, and the second segment 416b is located in the second through hole 414a and is in lap joint with part of the second surface 411b.

In these embodiments, the sealing member 416 includes the first segment 416a and the second segment 416b. With the second segment 416b and the second segment 416b covering at least part of the second surface 411b, the creepage distance between the electrode terminal 415 and a surface of the top cover sheet 411 is further increased, and the safety issue caused by short circuit between the top cover sheet 411 and the electrode terminal 415 is prevented. In addition, with the second segment 416b, a contact distance between the sealing member 416 and the top cover sheet 411 can also be increased, guaranteeing the stability of the relative position between the sealing member 416 and the top cover sheet 411.

The electrode terminal 415 can be arranged in many ways. As shown in FIGS. 5 to 9, at least part of the electrode terminal 415 can extend into the mounting holes 411c; in other embodiments, as shown in FIGS. 10 to 14, the electrode terminal 415 can be connected to the electrode tab of a battery core assembly through an adapting piece, and the adapting piece can extend into the mounting hole 411c.

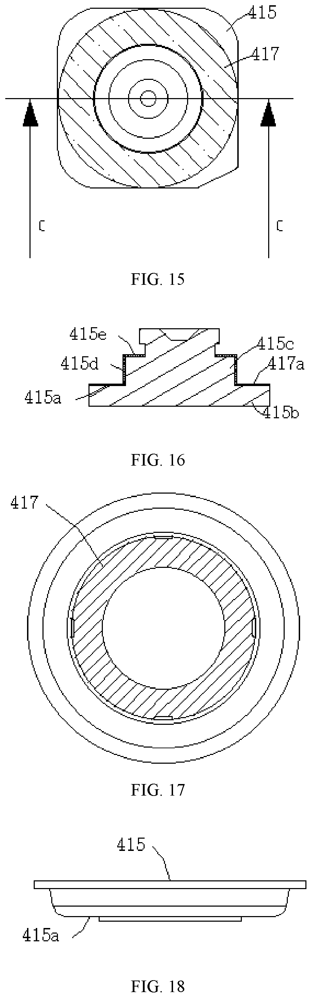

As shown in FIGS. 5 to 9 combined with FIGS. 15 and 16, according to some embodiments of the present disclosure, the electrode terminal 415 includes a connecting segment 415b and an abutment segment 415c. The connecting segment 415b is located in the mounting hole 411c. The abutment section 415c extends from the connecting segment 415b in a direction away from the mounting hole 411c. At least part of the abutment segment 415c is abutted against the sealing member 416, and at least part of the second insulating layer 417 is provided on the abutment segment 415c.

In these embodiments, at least part of the electrode terminal 415 is located in the mounting hole 411c, and the electrode terminal 415 includes the connecting segment 415b and the abutment segment 415c, which can improve the stability of the connection between the electrode terminal 415 and the top cover sheet 411. The abutment segment 415c is abutted against the sealing member 416, and the second insulating layer 417 is provided on the abutment segment 415c, thereby further preventing the safety issue caused by the short circuit between the top cover sheet 411 and the electrode terminal 415.

Optionally, the radial size of the abutment segment 415c of the electrode terminal 415 is greater than the radial size of the connecting segment 415b, and the radial size of the abutment segment 415c is greater than the aperture of the mounting hole 411c, allowing the abutment segment 415c can be stopped outside the mounting hole 411c, and guaranteeing the stability of the relative position between the electrode terminal 415 and the top cover sheet 411.

According to some embodiments of the present disclosure, as shown in FIGS. 15 and 16, the connecting segment 415b includes a bottom surface 415e facing away from the abutment segment 415c and a peripheral side surface 415d connecting the bottom surface 415e and the abutment segment 415c, and at least part of the second insulating layer 417 is provided on the peripheral side surface 415d of the connecting segment 415b.

In these embodiments, by at least part of the second insulating layer 417 provided on the peripheral side surface 415d of the connecting segment 415b, the insulation between the electrode terminal 415 and the inner wall surface 411d of the top cover sheet 411 can be guaranteed, thereby further preventing the safety issue caused by short circuit between the top cover sheet 411 and electrode terminal 415.

According to some embodiments of the present disclosure, as shown in FIGS. 15 and 16, at least a part of the second insulating layer 417 is provided on the bottom surface 415e, thereby further improving the insulation between the electrode terminal 415 and the top cover sheet 411, and preventing the safety issue caused by short circuit between the top cover sheet 411 and the electrode terminal 415.

According to some embodiments of the present disclosure, as shown in FIGS. 15 and 16, the second insulating layer 417 includes a third portion 417a located at the abutment segment 415c. The third portion 417a is annular and surrounds the connecting segment 415b.

In these embodiments, by the third portion 417a around the connecting segment 415b, it is possible to guarantee the insulation between the abutment segment 415c and the top cover sheet 411 different positions in the peripheral direction, further preventing the safety issue caused by the short circuit between the top cover sheet 411 and the electrode terminal 415.

Optionally, the abutment segment 415c is roughly in shape of a square prism, and the connecting segment 415b is cylindrical. The third portion 417a provided on the abutment segment 415c can surround the connecting segment 415b in an annular shape, and the third portion 417a is internally tangent to the edges of the abutment segment 415c, which can increase the distribution area of the third portion 417a and further prevent the safety issue caused by the short circuit between the top cover sheet 411 and the electrode terminal 415.

According to some embodiments of the present disclosure, as shown in FIGS. 10 to 14 and in combination with FIGS. 17 and 18, the electrode terminal 415 is located on the side where the second surface 411b is located, and the second insulating layer 417 is arranged in an annular shape on the abutment surface 415a to improve the insulation between the electrode terminal 415 and the top cover sheet 411 at different positions in the peripheral direction.

In these embodiments, the adapting piece can be electrically connected to the electrode terminal 415 through the mounting hole 411c, and the electrode terminal 415 is abutted against at least part of the second surface 411b. The second insulating layer 417 is arranged to be annular on the abutment surface 415a. Optionally, the second insulation layer 417 is set around the mounting hole 411c.

Optionally, the top cover sheet 411 is provided with a limiting step around the mounting hole 411c, and at least part of the electrode terminal 415 is located within the limiting step.

According to some embodiments of the present disclosure, the thickness of the first insulating layer 412 and/or the second insulating layer 417 is 2 µm-100 µm, to avoid insufficient insulation performance caused by the thickness of the first insulating layer 412 and/or the second insulating layer 417 being too small, or the thickness of the first insulating layer 412 and/or the second insulating layer 417 being too large, which affects the assembly between the top cover sheet 411 and the electrode terminal 415.

According to some embodiments of the present disclosure, the present disclosure also provides a battery cell, including the end cover assembly 41 as described in any of the above solutions.

According to some embodiments of the present disclosure, the present disclosure also provides a battery including the battery cell as described in any of the above solutions.

According to some embodiments of the present disclosure, the present disclosure also provides an electrical apparatus including the battery as described in any of the above solutions to provide electrical energy to the electrical apparatus.

The electrical apparatus can be any of the aforementioned devices or systems that use the battery.

Please refer to FIGS. 5 to 9, as well as FIGS. 15 and 16. The end cover assembly 41 provided in the embodiments includes the top cover sheet 411, the first insulating member 413, the second insulating member 414, the electrode terminal 415, and the sealing member 416. The top cover sheet 411 includes the first surface 411a and the second surface 411b arranged relative to each other along a thickness direction of the end cover sheet, the mounting hole 411c arranged along the thickness direction, and the inner wall surface 411d arranged facing the mounting hole 411c. The first insulating layer 412 is provided on the top cover sheet 411, and extends from the first surface 411a to the second surface 411b through the inner wall surface 411d. At least part of the first insulating member 413 is provided on the first surface 411a, and the first insulating member 413 includes the first through hole 413a communicated with the mounting hole 411c located inside the mounting hole 411c. At least part of the second insulating member 414 is provided on the second surface 411b, and the second insulating member 414 includes the second through hole 414a communicated with the mounting hole 411c. The mounting hole 411c is located inside the second through hole 414a, and a second side surface of the second insulating member 414 facing the second through hole 414a and the inner wall surface 411d are spaced in the peripheral direction of the mounting hole 411c. The first insulating layer 412 includes the first portion 412a located on the first surface 411a and the second portion 412b located on the second surface 411b. The dimension of the first portion 412a extending along the peripheral direction is smaller than that of the second portion 412b extending along the peripheral direction. And the second portion 412b is in lap joint with the surface of the second insulating member 414 facing the top cover sheet 411. The dimension of the second portion 412b extending the peripheral direction is greater than 1mm, and the dimension of the first portion 412a extending the peripheral direction is greater than 0.5mm.

The electrode terminal 415 is mounted in the mounting hole 411c, and at least part of the sealing member 416 is located in the mounting hole 411c. The electrode terminal 415 includes the abutment surface 415a abutted against the sealing member 416, and at least part of the abutment surface 415a is provided with the second insulating layer 417. The first insulating member 413 is in lap joint with the sealing member 416 in the mounting hole 411c. The sealing member 416 includes the first segment 416a located in the mounting hole 411c and the second segment 416b extending from the first segment 416a in a direction away from the mounting hole 411c. The second segment 416b is located in the second through hole 414a and is abutted against part of the second surface 411b. The electrode terminal 415 includes the connecting segment 415b and the abutment segment 415c, and the connecting segment 415b located in the mounting hole 411c. The abutment segment 415c is formed by an extension of the connecting segment 415b in a direction away from the mounting hole 411c, and at least part of the abutment segment 415c is abutted against the sealing member 416. The connecting segment 415b includes the bottom surface 415e away from the abutment segment 415c, and the peripheral side surface 415d connecting the bottom surface 415e and the abutting section 415c. At least part of the second insulating layer 417 is provided on the peripheral side surface 415d and the bottom surface 415e of the connecting segment 415b.

Please refer to FIGS. 10 to 14, as well as FIGS. 17 and 18. The end cover assembly 41 provided in the embodiments includes the top cover sheet 411, the first insulating member 413, the second insulating member 414, the electrode terminal 415, and the sealing member 416. The top cover sheet 411 includes the first surface 411a and the second surface 411b arranged relative to each other along a thickness direction of the end cover sheet, the mounting hole 411c arranged along the thickness direction, and the inner wall surface 411d arranged facing the mounting hole 411c. The first insulating layer 412 is provided on the top cover sheet 411, and extends from the first surface 411a to the second surface 411b through the inner wall surface 411d. At least part of the first insulating member 413 is provided on the first surface 411a, and the first insulating member 413 includes the first through hole 413a communicated with the mounting hole 411c located inside the mounting hole 411c. At least part of the second insulating member 414 is provided on the second surface 411b, and the second insulating member 414 includes the second through hole 414a communicated with the mounting hole 411c. The mounting hole 411c is located inside the second through hole 414a, and a second side surface of the second insulating member 414 facing the second through hole 414a and the inner wall surface 411d are spaced in the peripheral direction of the mounting hole 411c. The first insulating layer 412 includes the first portion 412a located on the first surface 411a and the second portion 412b located on the second surface 411b. The dimension of the first portion 412a extending along the peripheral direction is smaller than that of the second portion 412b extending along the peripheral direction. And the second portion 412b is in lap joint with the surface of the second insulating member 414 facing the top cover sheet 411. The dimension of the second portion 412b extending the peripheral direction is greater than 1mm, and the dimension of the first portion 412a extending the peripheral direction is greater than 0.5mm.

The electrode terminal 415 is located on the side where the second surface 411b is located, and the second insulating layer 417 is arranged on the abutment surface 415a in an annular shape. At least part of the sealing member 416 is located in the mounting hole 411c, and the electrode terminal 415 includes the abutment surface 415a that is abutted against the sealing member 416. At least part of the abutment surface 415a is provided with the second insulating layer 417. The first insulating member 413 is in a lap joint with the sealing member 416 in the mounting hole 411c. The sealing member 416 includes the first segment 416a located in the mounting hole 411c and the second segment 416b extending from the first segment 416a in a direction away from the mounting hole 411c. The second segment 416b is located in the second through hole 414a and is abutted against part of the second surface 411b.

Finally, it should be noted that: the above embodiments are only used to illustrate, not to limit, the technical solution of the present disclosure. Although the present disclosure is described in detail with reference to the foregoing embodiments, those skilled in the art should understand that they may still modify the technical solutions described in the foregoing embodiments, or replace some or all of the technical features with equivalents, but these modifications or replacements do not depart the essence of the corresponding technical solutions from the scope of the technical solutions of each embodiment of the present disclosure, and thus should fall within the scope of the claims and description of the present disclosure. Especially, as long as there is no structural conflict, various technical features mentioned in each embodiment can be combined in any way. The present disclosure is not limited to specific embodiments disclosed herein, but includes all technical solutions falling within the scope of the claims.

## Claims

1. An end cover assembly for a battery cell, **characterized by** comprising:
a top cover sheet, comprising a first surface and a second surface arranged opposite to each other along a thickness direction of the top cover sheet, a mounting hole extending through the top cover sheet along the thickness direction, and an inner wall surface facing the mounting hole,
wherein a first insulating layer is provided on the top cover sheet, and at least part of the first insulating layer is located on the inner wall surface.

2. The end cover assembly according to claim 1, **characterized in that** the first insulating layer extends from the first surface to the second surface through the inner wall surface.

3. The end cover assembly according to claim 2, **characterized by** further comprising:
a first insulating member, at least part of the first insulating member being disposed on the first surface, and the first insulating member comprising a first through hole communicating with the mounting hole and located inside the mounting hole; and
a second insulating member, at least part of the second insulating member being disposed on the second surface, wherein the second insulating member comprises a second through hole communicating with the mounting hole that is located inside the second through hole, and a second side surface of the second insulating member facing the second through hole and the inner wall surface are spaced apart in a peripheral direction of the mounting hole,
wherein the first insulating layer comprises a first portion located on the first surface and a second portion located on the second surface, and a dimension of the first portion extending along the peripheral direction is smaller than a dimension of the second portion extending along the peripheral direction.

4. The end cover assembly according to claim 3, **characterized in that** the second portion is in a lap joint with a surface of the second insulating member facing the top cover sheet.

5. The end cover assembly according to claim 3, **characterized in that**:
the dimension of the second portion extending along the peripheral direction is greater than 1 mm;
and/or, the dimension of the first portion extending along the peripheral direction is greater than 0.5 mm.

6. The end cover assembly according to claim 1, **characterized by** further comprising:
an electrode terminal installed on the top cover sheet; and
a sealing member, at least part of which is located in the mounting hole,
wherein the electrode terminal comprises an abutment surface that abuts against the sealing member, and at least part of the abutment surface is provided with a second insulating layer.

7. The end cover assembly according to claim 6, **characterized in that** the first insulating member is in a lap joint with the sealing member in the mounting hole.

8. The end cover assembly according to claim 7, **characterized in that** the sealing member comprises a first segment located in the mounting hole and a second segment extending from the first segment in a direction away from the mounting hole, and the second segment is located in the second through hole and abuts against part of the second surface.

9. The end cover assembly according to claim 6, **characterized in that** the electrode terminal comprises:
a connecting segment located in the mounting hole; and
an abutment segment extending from the connecting segment in a direction away from the mounting hole, at least part of the abutment segment abutting against the sealing member, and at least part of the second insulating layer being provided on the abutment segment.

10. The end cover assembly according to claim 9, **characterized in that** the connecting segment comprises a bottom surface facing away from the abutment segment and a peripheral side surface connecting the bottom surface and the abutment segment, and at least part of the second insulating layer is arranged on the peripheral side surface of the connecting segment.

11. The end cover assembly according to claim 10, **characterized in that** at least part of the second insulating layer is disposed on the bottom surface.

12. The end cover assembly according to claim 9, **characterized in that** the second insulating layer comprises a third portion located on the abutment segment and arranged in an annular shape around the connecting segment.

13. The end cover assembly according to claim 6, **characterized in that** the electrode terminal and the second surface are located on a same side of the top cover sheet, and the second insulating layer is provided in an annular shape on the abutment surface.

14. The end cover assembly according to claim 6, **characterized in that** a thickness of the first insulating layer and/or the second insulating layer is 2 µm to 100 µm.

15. A battery cell, **characterized by** comprising the end cover assembly according to any one of claims 1-14.

16. A battery, **characterized by** comprising the battery cell according to claim 15.

17. An electrical apparatus, **characterized by** comprising the battery as claimed in claim 16 configured to provide electrical energy.
